# EUROPÄISCHE PATENTSCHRIFT

(11) **EP 1 984 227 B1**
(45) Veröffentlichungstag und Bekanntmachung des Hinweises auf die Patenterteilung: **11.11.2009**
(21) Anmeldenummer: 07703113.6
(22) Anmeldetag: 30.01.2007
(51) Int. Cl.: B62D 1/184

(54) **VERSTELLBARE LENKSÄULE FÜR EIN KRAFTFAHRZEUG**
ADJUSTABLE STEERING COLUMN FOR A MOTOR VEHICLE
COLONNE DE DIRECTION RÉGLABLE POUR VÉHICULE AUTOMOBILE

(30) Priorität: 16.02.2006 DE 102006007553
(43) Veröffentlichungstag der Anmeldung: 29.10.2008
(73) Patentinhaber: ThyssenKrupp Presta Aktiengesellschaft, 9494 Eschen (LI)
(72) Erfinder: ARBANAS, Viktor, CH-5400 Baden (CH); MAAG, Michael, 9473 Gams (CH)
(74) Vertreter: Hofmann, Ralf U.
(86) Internationale Anmeldenummer: PCT/EP2007/000758
(87) Internationale Veröffentlichungsnummer: WO 2007/093276

(56) Entgegenhaltungen:
- DE-A1- 10 337 585

## Beschreibung

Die Erfindung betrifft eine verstellbare Lenksäule für ein Kraftfahrzeug, die eine Lenkspindel, eine die Lenkspindel lagernde Manteleinheit, eine am Chassis des Kraftfahrzeugs montierbare Konsoleneinheit mit mindestens einer Seitenwange, die sich seitlich der Manteleinheit erstreckt und die Manteleinheit trägt, eine öffen- und schließbare Feststelleinrichtung, in deren geschlossenem Zustand die Manteleinheit mit der Konsoleneinheit unverstellbar verbunden ist und in deren geöffnetem Zustand die Manteleinheit gegenüber der Konsoleneinheit in eine Verstellrichtung zur Längenverstellung der Lenksäule und in eine Verstellrichtung zur Höhen- bzw. Neigungsverstellung der Lenksäule verstellbar ist und die einen Langlöcher in der Manteleinheit und der mindestens einen Seitenwange durchsetzenden Spannbolzen umfasst, sowie mindestens ein vom Spannbolzen durchsetztes Stützteil aufweist, das einerseits in eine erste der Verstellrichtungen verschiebbar und in die zweite Verstellrichtung unverschiebbar mit der Manteleinheit und andererseits in die zweite Verstellrichtung verschiebbar und in die erste Verstellrichtung unverschiebbar mit der bzw. einer der Seitenwangen verbunden ist.

Eine derartige verstellbare Lenksäule ist aus der DE 103 37 585 A1 bekannt. Das an der Außenseite einer der Seitenwangen der Konsoleneinheit angeordnete Stützteil besitzt beidseitig der Seitenwangen in Richtung zur Manteleinheit sich erstreckende Randleisten, die an den gekrümmt ausgebildeten Schmalseiten der Seitenwange anliegen. Es wird dadurch zwischen der Seitenwange und dem Stützteil eine um die zur Höhen- bzw. Neigungsverstellung der Lenksäule dienende Schwenkachse gekrümmte Führung ausgebildet. Weiters weisen die Randleisten des Stützteils stiftartige Fortsätze auf, die zum einen in einer in Längsrichtung der Lenksäule sich erstreckenden Langlochausnehmung, zum anderen anliegend an der Unterseite der Manteleinheit in Längsrichtung der Manteleinheit verschiebbar geführt sind. Durch die in jeweils eine der beiden Verstellrichtungen wirkende formschlüssige Verbindung zwischen dem Stützteil und der Manteleinheit wird insbesondere im Crashfall eine Verdrehung der Manteleinheit um eine im Bereich des Spannbolzens liegende und parallel zu diesem sich erstreckende momentane Drehachse abgestützt.

Weitere verstellbare Lenksäulen mit formschlüssig wirkenden Stützteilen, durch die eine Verdrehung der Manteleinheit gegenüber der Konsoleneinheit um eine im Bereich des Spannbolzens liegende Achse verhindert wird, sind aus der US 5 927 152 A1 und der DE 102 61 538 A1 bekannt.

Nachteilig an den vorbekannten Konstruktionen ist es, dass die Stützteile eine relativ komplizierte dreidimensionale Form aufweisen, die zu einer Erhöhung der Herstellungskosten führt. Bei einer Ausbildung in Form eines Sinterteils kommt es zudem bei von einer Hauptebene des Stützteils in eine dritte Dimension abstehenden Fortsätzen zur Gefahr eines Abreißens, wenn eine hohe Kraft einwirkt, wie diese im Crashfall auftreten kann.

Aufgabe der Erfindung ist es, eine einfacher ausgebildete Einrichtung der eingangs genannten Art bereitzustellen, bei der im Crashfall dennoch eine sehr gute Abstützung der Manteleinheit gegen eine Verdrehung um eine im Bereich der Achse des Spannbolzens liegende und parallel zu diesem sich erstreckende Achse erreicht wird. Erfindungsgemäß gelingt dies durch eine verstellbare Lenksäule mit den Merkmalen des Anspruchs 1.

Durch die erfindungsgemäße Ausbildung des mindestens einen Stützteils in Form einer im Wesentlichen ebenen Platte wird eine sehr einfache Herstellung desselben ermöglicht. Beispielsweise kann das Stützteil als Blechstanzteil ausgebildet werden. Im Crashfall auftretende, im Sinne einer Verschwenkung der Manteleinheit gegenüber der Konsoleneinheit um eine im Bereich des Spannbolzens liegende Achse wirkende Kräfte können über die Bolzen-Langlochverbindungen zuverlässig übertragen werden. Insgesamt kann bei einer wesentlich vereinfachten Konstruktion eine vergleichbare Funktion wie bei der vorbekannten, Stützteile aufweisenden Lenksäule erreicht werden, diese teilweise sogar verbessert werden.

Im Zuge der bevorzugten Herstellung des Stützteils als Blechstanzteil können auch Sicken, Noppen oder Führungsleisten für weitere zusätzliche Funktionen eingebracht sein. Dann ist das Stützteil keine exakt ebene Platte, obwohl zur Lösung der Aufgabenstellung der Erfindung eine ebene Platte ausreichend ist. Unter diesem Blickwinkel ist die Begriffsbildung "im Wesentlichen eben" zu verstehen.

In einer vorteilhaften Ausführungsform der Erfindung können derartige Stützteile weiters zur reibschlüssigen Halterung der Manteleinheit im geschlossenen Zustand der Feststelleinrichtung eingesetzt werden. Hierbei können vorteilhafterweise mindestens zwei Stützteile vorgesehen werden, zwischen denen mindestens eine Lamelle angeordnet ist, die an der Konsoleneinheit oder Manteleinheit befestigt ist.

Weitere Vorteile und Einzelheiten der Erfindung werden im Folgenden anhand der beiliegenden Zeichnung erläutert. In dieser zeigen:
- Fig. 1: eine Schrägsicht einer Lenksäule gemäß einer ersten Ausführungsform der Erfindung;
- Fig. 2: eine Seitenansicht der Lenksäule;
- Fig. 3: eine Fig. 2 entsprechende Seitenansicht, nach einem Crash;
- Fig. 4: eine Schrägsicht entsprechend Fig. 1, wobei das Stützteil abgenommen dargestellt ist;
- Fig. 5: eine Fig. 1 entsprechende Schrägsicht von Teilen der Lenksäule, die auseinandergezo- gen dargestellt sind;
- Fig. 6: eine Schrägsicht der Lenksäule von der andern Seite, wobei Teile der Lenksäule ausei- nandergezogen dargestellt sind;
- Fig. 7: eine vergrößerte Darstellung des Lamellenpakets für die Feststellung der Lenksäule in die Längsrichtung;
- Fig. 8: eine vergrößerte Darstellung des Stützteilpakets in einer etwas modifizierten Ausfüh- rungsform;
- Fig. 9: eine stirnseitige Ansicht der Lenksäule (ohne das Montageteil 7);
- Fig. 10: eine Seitenansicht von der im Vergleich zu Fig. 2 gegenüberliegenden Seite;
- Fig. 11: eine Schrägsicht einer Lenksäule gemäß einem zweiten Ausführungsbeispiel der Erfin- dung.

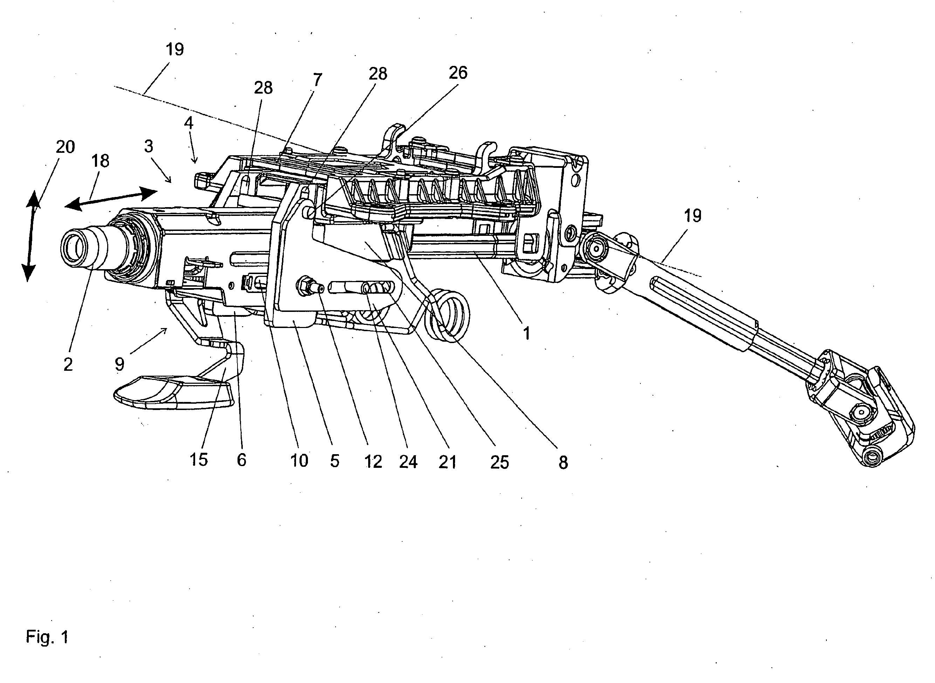

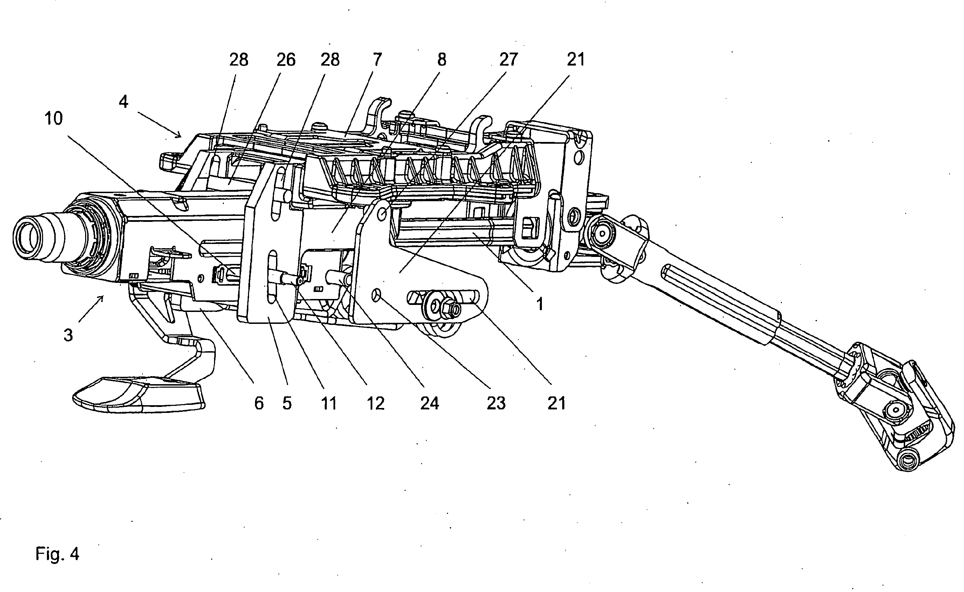

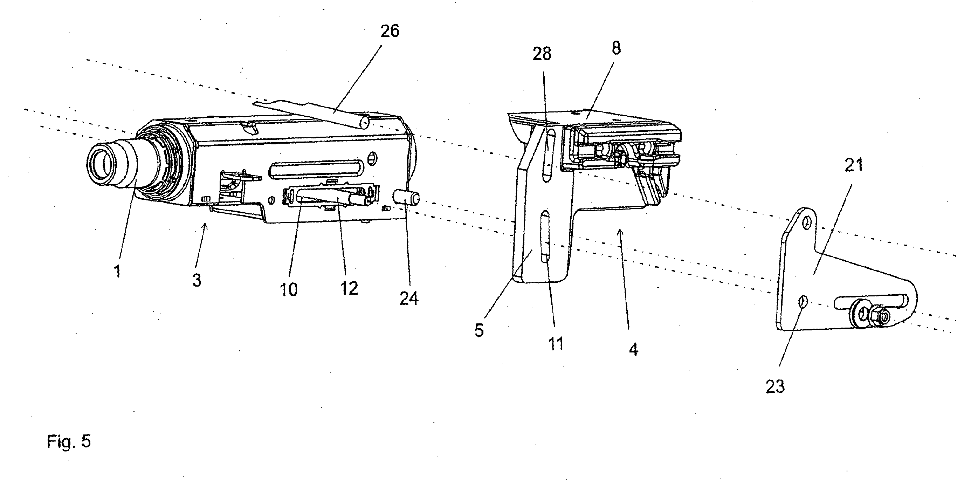

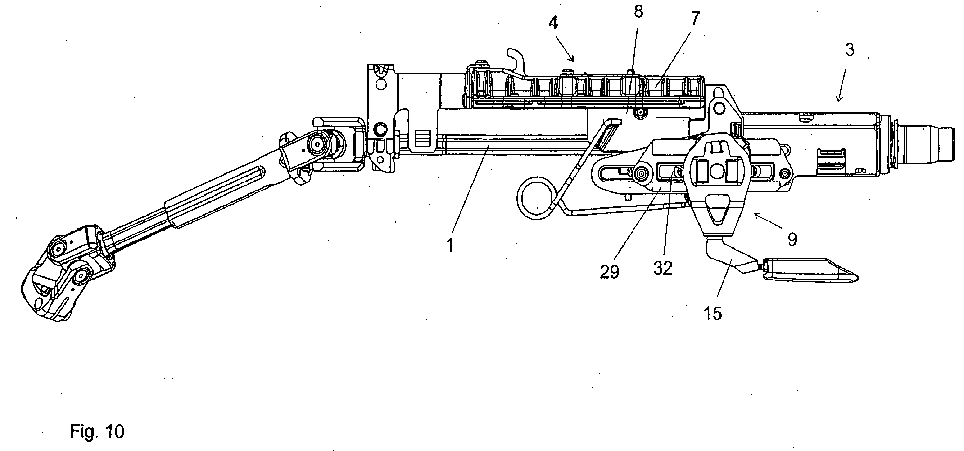

Ein Ausführungsbeispiel einer erfindungsgemäßen Lenksäule ist in den Fig. 1 bis 10 dargestellt. Die Lenksäule besitzt eine Lenkspindel 1, an der an einem Ende 2 ein Lenkrad anbringbar ist. Die Lenkspindel 1 wird von einer Manteleinheit 3 drehbar gelagert, welche auch als "Führungskasten" oder "Mantelrohr" bezeichnet wird. Die Manteleinheit 3 wird von einer Konsoleneinheit 4 getragen, welche am Chassis eines Kraftfahrzeugs montierbar ist. Die Konsoleneinheit 4 besitzt beidseitig der Manteleinheit 3 sich erstreckende Seitenwangen 5, 6.

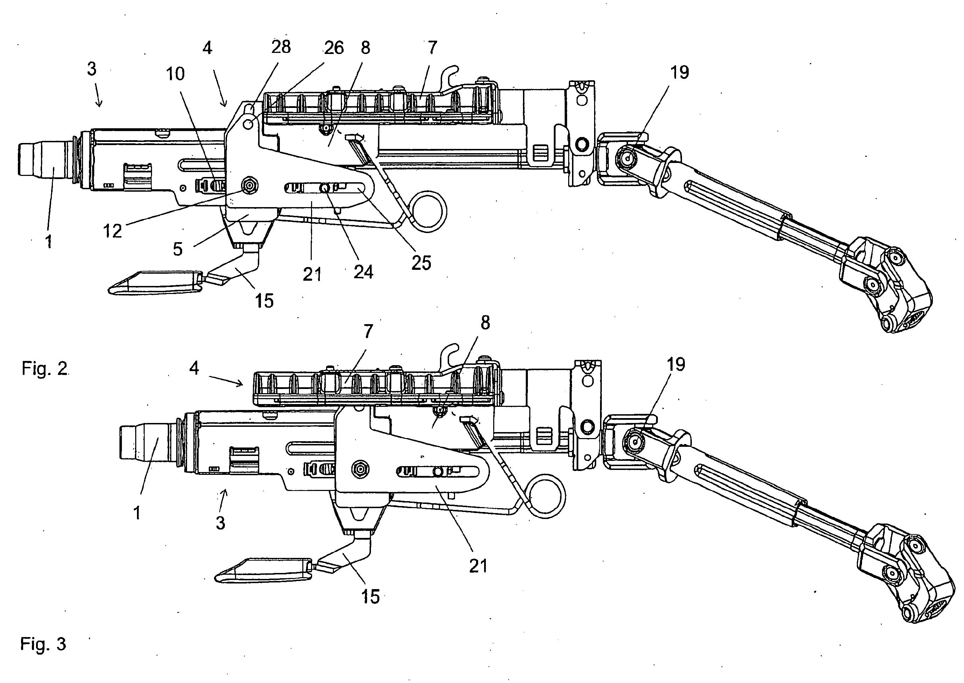

Im gezeigten Ausführungsbeispiel umfasst die Konsoleneinheit 4 ein im montierten Zustand der Lenksäule chassisfestes Montageteil 7 und ein Trägerteil 8, welches die Seitenwangen 5, 6 aufweist. Das Trägerteil 8 ist im Normalbetrieb unverschiebbar im Montageteil 7 gehalten und kann sich im Crashfall nach Überwindung einer Verbindungskraft gegenüber dem Montageteil 7 in Längsrichtung der Lenksäule schlittenartig verschieben. Die nach einem Crash eingenommene verschobene Stellung geht aus Fig. 3 hervor. Derartige Konstruktionen sind bekannt und die Verbindung zwischen dem Montageteil 7 und dem Trägerteil 8 muss an dieser Stelle nicht weiter erläutert werden.

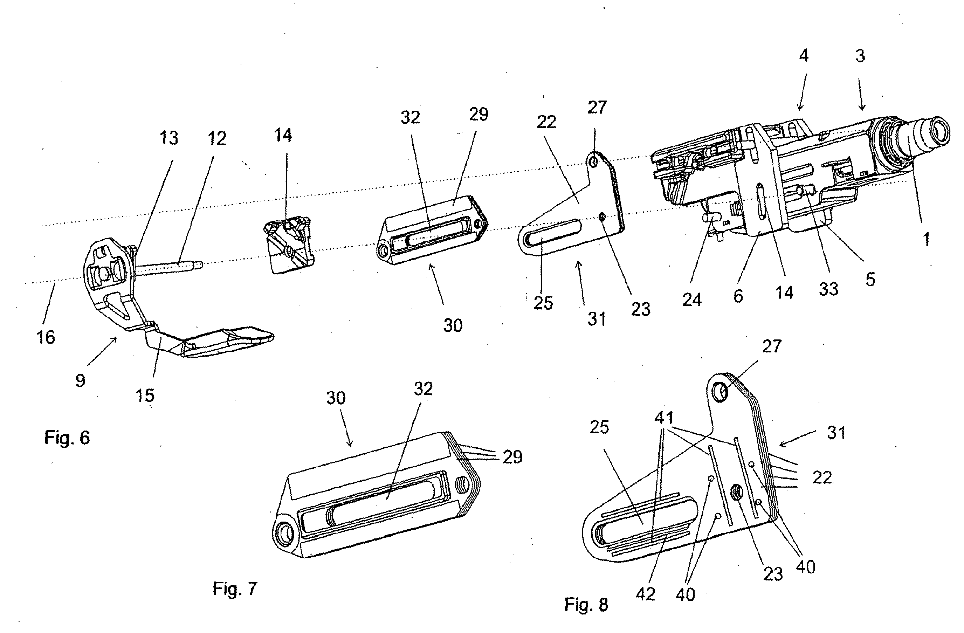

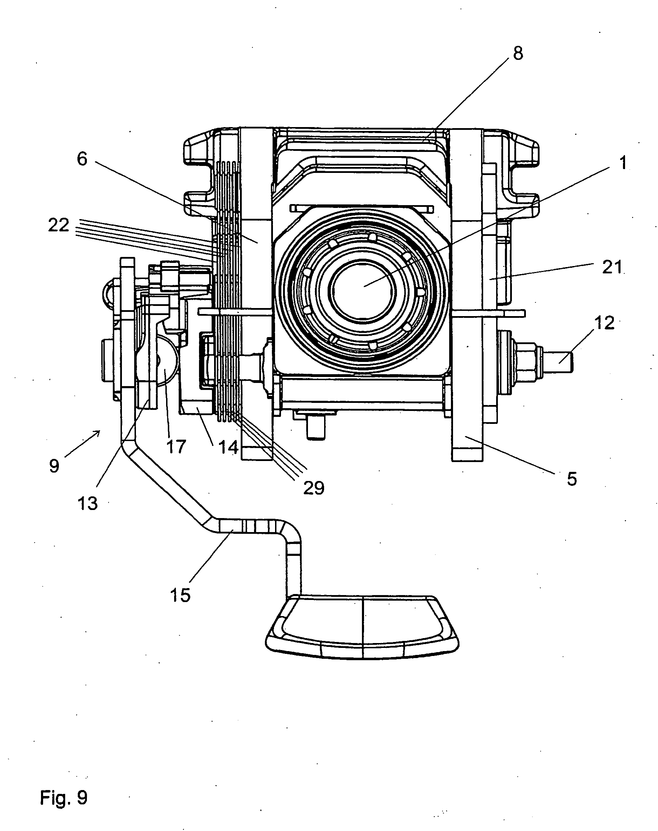

Im geöffneten Zustand einer Feststelleinrichtung 9 ist die Lenksäule in ihrer Länge und ihrer Neigung bzw. Höhe verstellbar. Die Feststelleinrichtung 9 umfasst einen sich kreuzende Langlöcher 10, 11 in der Manteleinheit 3 und den Seitenwangen 5, 6 durchsetzenden Spannbolzen 12. Auf dem Spannbolzen 12 ist eine Kulissenscheibe 13 (vgl. Fig. 6 und 9) angeordnet, die von einem Spannhebel 15 um die Längsachse 16 des Spannbolzens 12 drehbar ist. Die Kulissenscheibe 13 wirkt mit einer weiteren auf dem Spannbolzen 12 angeordneten und gegenüber diesem unverdrehbar gehaltenen Kulissenscheibe 14 zusammen. Durch Verschwenkung des Spannhebels 15 um die Längsachse 16 des Spannbolzens 12 kommt es zu einer Distanzierung der Kulissenscheiben 13, 14 (beispielsweise durch an der Kulissenscheibe 13 drehbar gelagerte Rollen 17, die an Schrägflächen der Kulissenscheibe 14 abrollen), wodurch der Spannbolzen 12 verspannt wird und weiter unten noch genauer erläuterte Reibflächen aneinander angedrückt werden. Der Spannbolzen 12 besitzt hierzu im Bereich seiner beiden Enden vergrößerte Endstücke, die beispielsweise von einem Bolzenkopf und einer Mutter gebildet werden können. Die Manteleinheit 3 ist damit gegenüber der Konsoleneinheit 4 unverstellbar gehalten. Diese Teile der Feststelleinrichtung können in bekannter Weise ausgebildet sein.

Im geöffneten Zustand der Feststelleinrichtung 9 ist die Manteleinheit 3 gegenüber der Konsoleneinheit 4 in Längsrichtung der Lenksäule verstellbar. Diese Verstellrichtung 18 ist in Fig. 1 durch den Doppelpfeil 18 angedeutet. Hierbei verschiebt sich der Spannbolzen 12 in dem parallel zur Längsrichtung 18 ausgerichteten Langloch 10 der Manteleinheit 3. Weiters ist die Manteleinheit 3 gegenüber der Konsoleneinheit 4 im geöffneten Zustand der Feststelleinrichtung 9 um eine quer zur Längsrichtung 18 der Lenksäule und parallel zum Spannbolzen 12 liegende Schwenkachse 19 verschwenkbar. Hierdurch kann die Lenksäule in ihrer Neigung bzw. in Höhenrichtung verstellt werden. Diese Verstellrichtung 20 ist in Fig. 1 durch den Doppelpfeil 20 angedeutet. Bei dieser Verschwenkung der Manteleinheit 3 um die Schwenkachse 19 verschiebt sich der Spannbolzen 12 in den in die Verstellrichtung 20 sich erstreckenden Langlöchern 11 in den Seitenwangen 5, 6. Diese Langlöcher 11 können geradlinig verlaufen (wobei es bei der Verschwenkung der Manteleinheit 3 um die Schwenkachse 19 zu einer geringfügigen Verschiebung des Spannbolzens 12 im Langloch 10 kommen könnte), weisen im gezeigten Ausführungsbeispiel aber einen kreisbogenförmigen Verlauf um die Schwenkachse 19 als Mittelpunkt auf.

Zur Ermöglichung der Verstellung der Manteleinheit 4 in die Längsrichtung 18 ist die Lenkspindel 1 in bekannter Weise teleskopierbar ausgebildet. Dadurch wird auch die Verschiebung des Trägerteils 8 gegenüber dem Montageteil 7 im Crashfall ermöglicht.

Die erfindungsgemäße Lenksäule umfasst weiters mindestens ein Stützteil 21, 22. Im gezeigten Ausführungsbeispiel sind mehrere solche Stützteile 21, 22 vorhanden. Ein solches Stützteil 21 ist bei den Darstellungen gemäß den Fig. 1 bis 5 auf der dem Betrachter zugewandten Seite der Lenksäule an der Außenseite der Seitenwange 5 angeordnet. Dieses Stützteil 21 ist in Form einer ebenen (flachen bzw. in einer Ebene liegenden) Platte ausgebildet und wird vom Spannbolzen 12 durch ein Loch 23 durchsetzt. Dabei soll das Loch 23 den Spannbolzen 12 derart begrenzen, dass sich das Stützteil gegenüber dem Spannbolzen nicht zu stark verschieben lässt, das heißt, das Loch 23 soll den Spannbolzen nicht mit zu viel Spiel umschließen. In einer bevorzugten Ausführungsform entspricht die Querschnittskontur des Lochs 23 in etwa der, im einfachsten Fall kreisrunden, Querschnittskontur des Spannbolzens 12, wobei vorzugsweise ein Spiel zwischen dem Loch 23 und dem Spannbolzen 12 von weniger als 10% des, den die Kontur des Querschnitts des Spannbolzens 12 umschreibenden Durchmessers beträgt.

Das Stützteil 21 ist mit der Manteleinheit 3 in die parallel zur Längsrichtung der Lenksäule liegende Verstellrichtung 18 verschiebbar verbunden und in die der Neigungs- bzw. Höhenverstellung entsprechende Verstellrichtung 20 durch eine formschlüssige Verbindung unverschiebbar verbunden. Hierzu ist an der Manteleinheit 3 ein Bolzen 24 angebracht, der ein sich parallel zur Verstellrichtung 18 erstreckendes Langloch 25 im Stützteil 21 durchsetzt. In Kombination mit der Verbindung des Stützteils 21 über den Spannbolzen12, der nur in der parallel zur Längsrichtung liegenden Verstellrichtung 18 gegenüber der Manteleinheit 3 verschiebbar ist, ist somit in der der Neigungs- bzw. Höhenverstellung entsprechenden Verstellrichtung 20 eine formschlüssige Verbindung zwischen dem Stützteil 21 und der Manteleinheit 3 erreicht.

Das Stützteil 21 ist weiters in die der Neigungs- bzw. Höhenverstellung entsprechende Verstellrichtung 20 verschiebbar mit der Konsoleneinheit 4 und in die der Längenverstellung entsprechende Verstellrichtung 18 durch eine formschlüssige Verbindung unverschiebbar mit der Konsoleneinheit 4 verbunden. Hierzu ist ein Bolzen 26 in die beiden Verstellrichtungen 18, 20 unverschiebbar mit dem Stützteil 21 verbunden, beispielsweise indem er mit geringem Spiel ein Loch 27 im Stützteil 21 durchsetzt. Der Bolzen 26 könnte beispielsweise auch am Stützteil 21 angeschweißt sein. Der Bolzen 26 erstreckt sich durch ein zusätzliches Langloch 28 in der dem Stützteil 21 benachbarten Seitenwange 5, 6. Das Langloch 28 besitzt vorzugsweise einen um die Schwenkachse 19 als Zentrum kreisbogenförmig gekrümmten Verlauf. In Kombination mit der Verbindung des Stützteils 21 über den Spannbolzen 12, der nur in der der Neigungs- bzw. Höhenverstellung entsprechenden Verstellrichtung 20 gegenüber der Konsoleneinheit 4 mit ihren Seitenwangen 5,6 in einem Langloch 11 verschiebbar ist, ist somit in der parallel zur Längsrichtung liegenden Verstellrichtung liegenden 18 eine formschlüssige Verbindung zwischen dem Stützteil 21 und der Konsoleneinheit 4 erreicht. Im Falle der Ausbildung des Langlochs 11 mit einem gradlinigen Verlauf könnte das Langloch 28 auch mit einem gradlinigen Verlauf ausgebildet sein.

Wenn im Crashfall auf die Manteleinheit 3 ein Drehmoment um die Längsachse 16 des Spannbolzens 12 wirkt oder auch um eine in der Nähe des Spannbolzens 12 und parallel zu diesem liegende momentane Achse wirkt, so wird dieses Drehmoment über den Bolzen 24 auf das Stützteil 21 und von diesem über den Bolzen 26 auf die Konsoleneinheit 4 übertragen, so dass das Drehmoment über Vermittlung des Stützteils 21 von der Konsoleneinheit 4 abgestützt werden kann und einer Drehung der Manteleinheit 3 gegenüber der Konsoleneinheit 4 entgegengewirkt wird.

Auf der andern Seite der Manteleinheit 3 sind im gezeigten Ausführungsbeispiel weitere Stützteile 22 angeordnet, die in völlig analoger Weise wie das Stützteil 21 ausgebildet sind und in der im Zusammenhang mit dem Stützteil 21 beschriebenen Weise mit der Manteleinheit 3 der Konsoleneinheit 4 verbunden sind und vom Spannbolzen 12 durchsetzt werden. Es sind hier aber mehrere solcher Stützteile 22 vorhanden, die vorzugsweise mit einer geringeren Dicke als das Stützteil 21 ausgebildet sind und ein Stützteilpaket 31 bilden. Diese Stützteile 22 wirken mit Lamellen 29 eines Lamellenpakets 30 zusammen, wobei die Stützteile 22 des Stützteilpakets 31 und die Lamellen 29 des Lamellenpakets 30 im montierten Zustand einander abwechseln, d.h. nach Art einer Lamellenkupplung sandwichartig geschichtet sind.

Im Ausführungsbeispiel sind die Stützteile 22 eben ausgebildet. Das Stützteil kann jedoch auch, insbesondere wenn es wie eine Lamelle in ein Lamellenpaket verbaut ist, mit leistenartigen Erhöhungen 41, wie sie in Figur 8 angedeutet sind, ausgebildet sein. Durch derartige leistenartige Erhöhungen 41, insbesondere parallel entlang des Langlochs 21 können zur Verbesserung der Funktion des Klemmsystems Druckpunkte oder-linien ausgebildet werden. Ebenso können an für das Klemmsystem besonders vorteilhaften Positionen Druckpunkte 40, wie sie ebenfalls in Figur 8 angedeutet sind, beispielsweise durch einfache Ausprägungen, in das Stützteil eingebracht sein. Weiter ist auch die Integration einer Verdrehsicherung 42, ebenfalls in Figur 8 angedeutet, für etwaig vorhandene Lamellenpakete 30, beispielsweise durch einfache Erhöhungen oder Ausprägungen, die in entsprechende Freistellungen oder sogar die bereits vorhandenen Langlöcher in den Lamellen eingreifen, vorgesehen sein. Die Auswahl der einzelnen zusätzlichen Merkmale ist in der jeweiligen Konstruktion festzulegen. Dabei werden sicher nur einzelne der in der Figur 8 schematisch angedeuteten Profilierungen und Falzungen in der Praxis angewendet werden. Derartige Stützteile sind mit von der Erfindung umfasst.

Die Lamellen 29 weisen in die Verstellrichtung 18 sich erstreckende Langlöcher 32 auf, die deckungsgleich mit den Langlöchern 10 in der Manteleinheit liegen und vom Spannbolzen 12 durchsetzt werden. Die Lamellen 29 sind an der Manteleinheit 3 befestigt, beispielsweise mittels an der Mänteleinheit 3 angebrachter Bolzen 24, 33. In achsialer Richtung der Bolzen 24, 33 kann eine Verschiebung der Lamellen 29 ermöglicht sein. Der Bolzen 24 ist im gezeigten Ausführungsbeispiel derjenige, der in die Langlöcher 25 der Stützteile 22 ragt. Zur Befestigung der Lamellen 29 könnte auch ein separater Bolzen vorhanden sein bzw. könnten die Lamellen 29 auch in anderer Weise als gezeigt in die Verstellrichtungen 18, 20 unverschiebbar mittels formschlüssiger Verbindungen mit der Manteleinheit 3 verbunden sein.

Bei einer Verstellung der Manteleinheit 3 in die parallel zur Längsrichtung der Lenksäule liegende Verstellrichtung 18 werden die Lamellen 29 mit der Manteleinheit mitbewegt, während die Stützteile 22 in diese Verstellrichtung 18 unverschiebbar mit der Konsoleneinheit 4 verbunden sind. Im geschlossenen Zustand der Feststelleinrichtung 9 bilden die aneinander anliegenden Flächen der Stützteile 22 und Lamellen 29 somit Reibflächen zur Feststellung der Verstellung in die Verstellrichtung 18.

Weitere Reibflächen zur Feststellung in die Verstellrichtung 18 werden bei diesem Ausführungsbeispiel durch die Anlage der Kulissenscheibe 14 an der ihr benachbarten Lamelle 29 und durch die Anlage der Innenflächen der Seitenwangen 5, 6 an die Außenflächen der Manteleinheit 3 gebildet. Zur Feststellung der Verstellung in die Verstellrichtung 20 dienen in diesem Ausführungsbeispiel Reibflächen, die von der Anlage des der Seitenwange 6 benachbarten Stützteils 22 an dieser Seitenwange 6, der Anlage des Stützteils 21 an der Seitenwange 5 und der Anlage der Innenflächen der Seitenwangen 5, 6 an den Außenflächen der Manteleinheit 3 gebildet werden.

Der Bolzen 26 ist in diesem Ausführungsbeispiel durchgehend ausgebildet und durchsetzt Langlöcher 28 in beiden Seitenwangen 5, 6 und ist in beidseitigen Endabschnitten mit dem auf beiden Seiten der Manteleinheit 3 angeordneten Stützteil 21, 22 in die Verstellrichtungen 18, 20 unverschiebbar verbunden.

Grundsätzlich wäre es auch denkbar und möglich, die Langlöcher 10, 11 in der Manteleinheit 3 und den Seitenwangen 5, 6 in die jeweils andere Verstellrichtung 18, 20 auszurichten, wobei auch für die Richtung, in welche das Stützteil 21, 22 mit der Manteleinheit 3 bzw. Seitenwange 5, 6 verschiebbar bzw. unverschiebbar verbunden ist, gerade die jeweils andere der Verstellrichtungen 18, 20 herangezogen werden müsste.

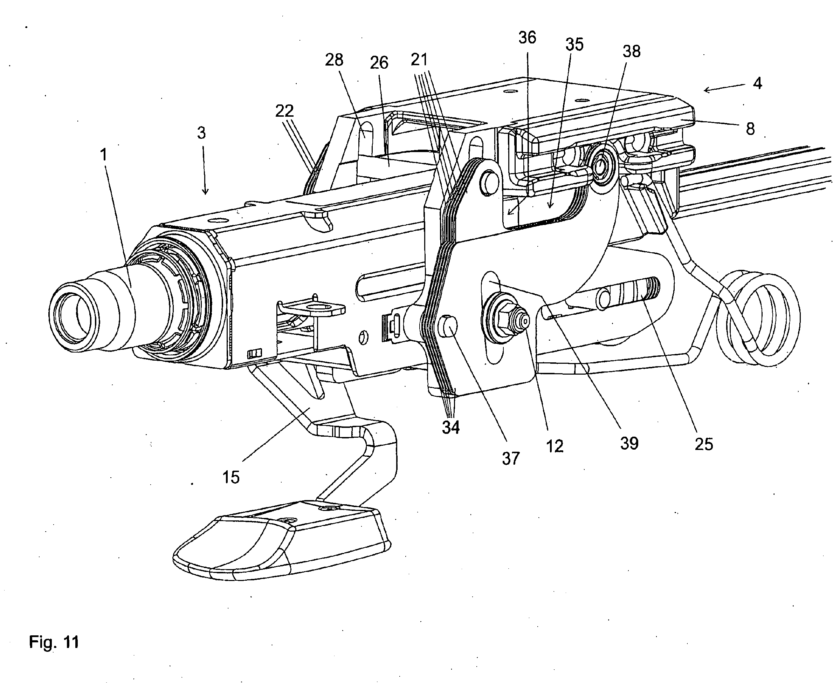

Beim Ausführungsbeispiel gemäß Fig. 11 entspricht die Ausbildung auf der vom Betrachter abgewandten Seite der bereits im Zusammenhang mit dem ersten Ausführungsbeispiel beschriebenen Ausbildung. Auf der dem Betrachter zugewandten Seite ist dieses Ausführungsbeispiel gegenüber dem zuvor beschriebenen Ausführungsbeispiel dahingehend geändert, dass ebenfalls mehrere Stützteile 21 vorhanden sind, die ein Stützteilpaket 36 bilden und mit Lamellen 34 zusammenwirken. Die Lamellen 34 dieses Lamellenpakets 35 sind mit den Stützteilen 21 des Stützteilpakets 36 sandwichartig geschichtet und an der Konsoleneinheit 4 angebracht, beispielsweise mittels eines an der Seitenwange 5 angebrachten Bolzens 37, der Löcher in den Lamellen 34 durchsetzt, und eines am Trägerteil 8 angebrachten Verbindungsteils 38. Eine in die Verstellrichtungen 18, 20 unverschiebbare formschlüssige Verbindung der Lamellen 34 mit der Konsoleneinheit 4 könnte auch in anderer Weise ausgebildet werden. Die Lamellen 34 besitzen Langlöcher 39, die sich in die Verstellrichtung 20 erstrecken und deckungsgleich mit den Langlöchern 11 in den Seitenwangen 5, 6 sind. Die Langlöcher 39 werden vom Spannbolzen 12 durchsetzt.

Im geöffneten Zustand der Feststelleinrichtung 9 verschieben sich bei einer Verstellung der Manteleinheit 3 in die Verstellrichtung 20 die Stützteile 21 gegenüber den Lamellen 34 in diese Verstellrichtung 20. Im geschlossenen Zustand der Feststelleinrichtung 9, wenn die Lamellen 34 mit den Stützteilen 21 durch den Spannbolzen 12 verspannt werden, bilden die aneinander anliegenden Flächen der Lamellen 34 und Stützteile 21 somit Reibflächen zur Feststellung einer Verstellung in diese der Höhen- bzw. Neigungsverstellung entsprechende Verstellrichtung 20.

Unterschiedliche Modifikationen der beschriebenen Ausführungsbeispiele sind denkbar und möglich, ohne den Bereich der Erfindung zu verlassen. So könnten beispielsweise zwischen die Stützteile 21, 22 eines jeweiligen Stützteilpakets 31, 36 sowohl Lamellen 29, die mit der Manteleinheit 3 verbunden sind, als auch Lamellen 34, die mit der Konsoleneinheit 4 verbunden sind, geschichtet werden.

Ein jeweiliges Lamellenpaket 30, 35 bzw. Stützteilpaket 31, 36 könnte auch mehr oder weniger einzelne Lamellen bzw. Stützteile umfassen. So könnte beispielsweise nur eine einzelne, zwischen zwei Stützteilen angeordnete Lamelle oder ein einzelnes zwischen zwei Lamellen angeordnetes Stützteil vorhanden sein.

Die Feststelleinrichtung 9 könnte zusätzlich zu oder anstelle der beschriebenen reibschlüssig wirkenden Feststellelemente auch andere Feststellelemente, beispielsweise formschlüssig wirkende Feststellelemente umfassen. Beispielsweise ist es denkbar und möglich, auf einer Seite der Manteleinheit 3 ein Stützteil 21 anzuordnen und auf der andern Seite der Manteleinheit 3 Verzahnungen vorzusehen, die im geschlossenen Zustand der Feststelleinrichtung 9 miteinander in Eingriff kommen.

Die Bolzen-Langloch-Verbindungen zwischen einem jeweiligen Stützteil 21, 22 und der Manteleinheit 3 bzw. Konsoleneinheit 4 könnte auch in einer anderen als der gezeigten Weise ausgebildet sein, so könnten beispielsweise Bolzen und Langloch zwischen den beiden jeweils zu verbindenden Teilen auch in einer gegenüber der gezeigten Anordnung getauschten Weise angeordnet sein.

Weiter ist die Erfindung nicht darauf beschränkt, dass das mindestens eine Stützteil an der von der Manteleinheit abgewandten Seite einer und/oder beider Seitenwangen der Konsoleneinheit angeordnet ist. Es ist vielmehr auch denkbar und möglich, das Stützteil 21, 22 zwischen der Manteleinheit 3 und der Seitenwange 5, 6 anzuordnen. Dabei sind alle Kombinationen, wie: nur ein einziges Stützteil 21, 22, zwei oder mehrere Stützteile 21, 22, Konsoleneinheit 4 mit einer oder zwei oder gar mehrerer Seitenwangen 5, 6, Anordnung zwischen Manteleinheit 4 und Seitenwange 5, 6, Anordnung auf der von der Manteleinheit 3 abgewandten Seite der Seitenwange 5,6 usw. denkbar und möglich und von der Erfindung umfasst.

### Legende

### zu den Hinweisziffern:

- 1: Lenkspindel
- 2: Ende
- 3: Manteleinheit
- 4: Konsoleneinheit
- 5: Seitenwange
- 6: Seitenwange
- 7: Montageteil
- 8: Trägerteil
- 9: Feststelleinrichtung
- 10: Langloch
- 11: Langloch
- 12: Spannbolzen
- 13: Kulissenscheibe
- 14: Kulissenscheibe
- 15: Spannhebel
- 16: Längsachse
- 17: Rolle
- 18: Verstellrichtung
- 19: Schwenkachse
- 20: Verstellrichtung

- 21: Stützteil
- 22: Stützteil
- 23: Loch
- 24: Bolzen
- 25: Langloch
- 26: Bolzen
- 27: Loch
- 28: Langloch
- 29: Lamelle
- 30: Lamellenpaket
- 31: Stützteilpaket
- 32: Langloch
- 33: Bolzen
- 34: Lamelle
- 35: Lamellenpaket
- 36: Stützteilpaket
- 37: Bolzen
- 38: Verbindungsteil
- 39: Langloch

## Patentansprüche

1. Verstellbare Lenksäule für ein Kraftfahrzeug, die eine Lenkspindel (1), eine die Lenkspindel (1) lagernde Manteleinheit (3), eine am Chassis des Kraftfahrzeugs montierbare Konsoleneinheit (4) mit mindestens einer Seitenwange (5, 6), die sich seitlich der Manteleinheit (3) erstreckt und die Manteleinheit (3) trägt, eine öffen- und schließbare Feststelleinrichtung (9), in deren geschlossenem Zustand die Manteleinheit (3) mit der Konsoleneinheit (4) unverstellbar verbunden ist und in deren geöffnetem Zustand die Manteleinheit (3) gegenüber der Konsoleneinheit (4) in eine Verstellrichtung (18) zur Längenverstellung der Lenksäule und in eine Verstellrichtung (20) zur Höhen- bzw. Neigungsverstellung der Lenksäule verstellbar ist und die einen Langlöcher (10, 11) in der Manteleinheit (3) und der mindestens einen Seitenwange (5, 6) durchsetzenden Spannbolzen (12) umfasst, sowie mindestens ein vom Spannbolzen (12) durchsetztes Stützteil (21, 22) aufweist, das einerseits in einer ersten der Verstellrichtungen (18) verschiebbar und in die zweite Verstellrichtung (20) unverschiebbar mit der Manteleinheit (3) und andererseits in die zweite Verstellrichtung (20) verschiebbar und in die erste Verstellrichtung (18) unverschiebbar mit der bzw. einer der Seitenwangen (5, 6) verbunden ist, **dadurch gekennzeichnet, dass** das mindestens eine Stützteil (21, 22) in Form einer im Wesentlichen ebenen Platte ausgebildet ist und die in die jeweilige Verstellrichtung (18, 20) verschiebbare und in die jeweils andere Verstellrichtung (18, 20) unverschiebbare Verbindung mit der Manteleinheit (3) und der Seitenwange (5, 6) jeweils durch mindestens einen ein Langloch (25, 28) durchsetzenden Bolzen (24, 26) erfolgt, wobei der Bolzen (24, 26) mit einem der beiden zu verbindenden Teile (21, 22; 3, 5, 6) in beide Verstellrichtungen (18, 20) unverschiebbar verbunden ist und das Langloch (25, 28) im anderen der beiden zu verbindenden Teile (21, 22; 3, 5, 6) angeordnet ist und sich in die jeweilige Verstellrichtung (18, 20) erstreckt.

2. Verstellbare Lenksäule nach Anspruch 1, **dadurch gekennzeichnet, dass** zur Verbindung des mindestens einen Stützteils (21, 22) mit der Seitenwange (5, 6) oder einer der Seitenwangen (5, 6) der mindestens eine Bolzen (26) mit dem Stützteil (21, 22) in beide Verstellrichtungen (18, 20) unverschiebbar verbunden ist und das vom Bolzen durchsetzte Langloch (28) in der Seitenwange (5, 6) angeordnet ist.

3. Verstellbare Lenksäule nach Anspruch 2, **dadurch gekennzeichnet, dass** der Bolzen (26) Langlöcher (28) in beidseitig der Manteleinheit (3) liegenden Seitenwangen (5, 6) durchsetzt.

4. Verstellbare Lenksäule nach Anspruch 3, **dadurch gekennzeichnet, dass** der Bolzen (26) in beidseitigen Endabschnitten mit jeweils mindestens einem Stützteil (21, 22) in die Verstellrichtungen (18, 20) unverschiebbar verbunden ist.

5. Verstellbare Lenksäule nach einem der Ansprüche 1 bis 4, **dadurch gekennzeichnet, dass** zur Verbindung des mindestens einen Stützteils (21, 22) mit der Manteleinheit (3) der mindestens eine Bolzen (24) an der Manteleinheit (3) angebracht ist und das Stützteil (21, 22) das vom Bolzen (24) durchsetzte Langloch (25) aufweist.

6. Verstellbare Lenksäule nach einem der Ansprüche 1 bis 5, **dadurch gekennzeichnet, dass** das mindestens eine Stützteil (21, 22) an der Außenseite der Seitenwange (5, 6)oder einer der Seitenwangen (5, 6) angeordnet ist.

7. Verstellbare Lenksäule nach einem der Ansprüche 1 bis 6, **dadurch gekennzeichnet, dass** auf mindestens einer Seite der Manteleinheit (3) mindestens zwei Stützteile (21, 22) vorhanden sind, zwischen denen mindestens eine Lamelle (29, 34) angeordnet ist, die an der Manteleinheit (3) oder Konsoleneinheit (4) angebracht ist, und/oder auf mindestens einer Seite der Manteleinheit (3) mindestens zwei Lamellen (29, 34) angeordnet sein, die an der Manteleinheit (3) oder an der Konsoleneinheit (4) angebracht sind und zwischen denen mindestens ein Stützteil (21, 22) angeordnet ist, wobei die aneinander anliegenden Flächen des jeweiligen Stützteils (21, 22) und der jeweiligen Lamelle (29, 34) Reibflächen zur Feststellung der Manteleinheit (3) gegenüber der Konsoleneinheit (4) in mindestens eine der Verstellrichtungen (18, 20) im geschlossenen Zustand der Feststelleinrichtung bilden.

8. Verstellbare Lenksäule nach Anspruch 7, **dadurch gekennzeichnet, dass** beidseitig der Manteleinheit (3) jeweils mindestens ein Stützteil (21, 22) vorhanden ist.

9. Verstellbare Lenksäule nach einem der Ansprüche 1 bis 8, **dadurch gekennzeichnet, dass** auf beiden Seiten der Manteleinheit (3) mindestens eine Lamelle (29, 34) vorhanden ist, die eine mit dem jeweiligen Stützteil (21, 22) zusammenwirkende Reibfläche ausbildet.

10. Verstellbare Lenksäule nach Anspruch 9, **dadurch gekennzeichnet, dass** die mindestens eine Lamelle (29) auf der einen Seite der Manteleinheit (3) zur Ausbildung eines in die parallel zur Längsrichtung liegende Verstellrichtung (18) wirkenden Feststellelements an der Manteleinheit (3) angebracht ist und die mindestens eine Lamelle (34) auf der anderen Seite der Manteleinheit (3) zur Ausbildung eines in der der Höhen- und/oder Neigungsverstellung entsprechenden Verstellrichtung (20) wirkenden Feststellelements an der Konsoleneinheit (4) angebracht ist.

11. Verstellbare Lenksäule nach einem der Ansprüche 1 bis 10, **dadurch gekennzeichnet, dass** mindestens ein zumindest zwei Stützteile (21, 22) umfassendes Stützteilpaket (31, 36) vorhanden ist, das mit einem mindestens zwei Lamellen (29, 34) umfassenden Lamellenpaket (30, 35) zusammenwirkt, wobei die Stützteile (21, 22) des Stützteilpakets (31, 36) und die Lamellen (29, 34) des Lamellenpakets (30, 35) sandwichartig geschichtet angeordnet sind.

12. Verstellbare Lenksäule nach einem der Ansprüche 1 bis 11, **dadurch gekennzeichnet, dass** das Stützteil (21, 22) als Blechstanzteil ausgebildet ist.

## Claims

1. An adjustable steering column for a motor vehicle, which comprises a steering spindle (1), a casing unit (3) mounting the steering spindle (1), a bracket unit (4) capable of being mounted on the chassis of the motor vehicle and with at least one side wall (5, 6) which extends to the side of the casing unit (3) and supports the casing unit (3), a fixing device (9) which is capable of being opened and closed and in the closed state of which the casing unit (3) is connected to the bracket unit (4) in a non-adjustable manner and in the opened state of which the casing unit (3) is adjustable with respect to the bracket unit (4) in one adjustment direction (18) for the longitudinal adjustment of the steering column and in one adjustment direction (20) for the vertical or inclination adjustment of the steering column and which comprises a clamping pin (12) passing through elongate holes (10, 11) in the casing unit (3) and the at least one side wall (5, 6), as well as at least one support part (21, 22) through which the clamping pin (12) passes and which is connected to the casing unit (3) so as to be displaceable in a first of the adjustment directions (18) and non-displaceable in the second adjustment direction (20) on the one hand and is connected to the or one of the side walls (5, 6) so as to be displaceable in the second adjustment direction (20) and non-displaceable in the first adjustment direction (18) on the other hand, **characterized in that** the at least one support part (21, 22) is designed in the form of a substantially flat plate, and the connexion - displaceable in the respective adjustment direction (18, 20) and non-displaceable in the other adjustment direction (18, 20) in each case - to the casing unit (3) and to the side walls (5, 6) is made in each case by means of at least one pin (24, 26) extending through an elongate hole (25, 28), wherein the pin (24, 26) is connected, so as to be non-displaceable in both adjustment directions (18, 20), to one of the two parts (21, 22; 3, 5, 6) to be connected and wherein the elongate hole (25, 28) is arranged in the other of the two parts (21, 22; 3, 5, 6) to be connected and extends in the respective adjustment direction (18, 20).

2. An adjustable steering column according to Claim 1, **characterized in that**, in order to connect the at least one support part (21, 22) to the side wall (5, 6) or one of the side walls (5, 6), the at least one pin (26) is connected to the support part (21, 22) so as to be non-displaceable in both adjustment directions (18, 20), and the elongate hole (28) through which the pin passes is arranged in the side wall (5, 6).

3. An adjustable steering column according to Claim 2, **characterized in that** the pin (26) passes through elongate holes (28) in side walls (5, 6) situated on both sides of the casing unit (3).

4. An adjustable steering column according to Claim 3, **characterized in that** the pin (26) is connected in end portions on both sides to at least one support part (21, 22) in each case so as to be non-displaceable in the adjustment directions (18, 20).

5. An adjustable steering column according to any one of Claims 1 to 4, **characterized in that**, in order to connect the at least one support part (21, 22) to the casing unit (3), the at least one pin (24) is attached to the casing unit (3), and the support part (21, 22) has the elongate hole (28) through which the pin (24) passes.

6. An adjustable steering column according to any one of Claims 1 to 5, **characterized in that** the at least one support part (21, 22) is arranged on the outer side of the side wall (5, 6) or one of the side walls (5, 6).

7. An adjustable steering column according to any one of Claims 1 to 6, **characterized in that** at least two support parts (21, 22), between which is arranged at least one lamella (29, 34) which is attached to the casing unit (3) or the bracket unit (4), are provided on at least one side of the casing unit (3), and/or at least two lamellae (29, 34) which are attached to the casing unit (3) or the bracket unit (4) and between which is arranged at least one support part (21, 22), are arranged on at least one side of the casing unit (3), wherein the mutually abutting faces of the respective support part (21, 22) and of the respective lamella (29, 34) form friction faces for fixing the casing unit (3) with respect to the bracket unit (4) in at least one of the adjustment directions (18, 20) in the closed state of the fixing device.

8. An adjustable steering column according to Claim 7, **characterized in that** at least one support part (21, 22) is provided in each case on both sides of the casing unit (3).

9. An adjustable steering column according to any one of Claims 1 to 8, **characterized in that** at least one lamella (29, 34), which forms a friction face co-operating with the respective support part (21, 22), is provided on both sides of the casing unit (3).

10. An adjustable steering column according to Claim 9, **characterized in that** the at least one lamella (29) is attached to one side of the casing unit (3) in order to form a fixing element - acting in the adjustment direction (18) orientated parallel to the longitudinal direction - on the casing unit (3), and the at least one lamella (34) is attached to the other side of the casing unit (3) in order to form a fixing element - acting in the adjustment direction (20) corresponding to the vertical and/or inclination adjustment - on the bracket unit (4).

11. An adjustable steering column according to any one of Claims 1 to 10, **characterized in that** at least one stack (31, 36) of support parts is provided, which comprises at least two support parts (21, 22) and which co-operates with a stack (30, 35) of lamellae comprising at least two lamellae (29, 34), wherein the support parts (21, 22) of the stack (31, 36) of support parts and the lamellae (29, 34) of the stack (30, 35) of lamellae are arranged layered in a sandwich manner.

12. An adjustable steering column according to any one of Claims 1 to 11, **characterized in that** the support part (21, 22) is designed in the form of a stamped sheet-metal part.

## Revendications

1. Colonne de direction, réglable de véhicule automobile, comprenant une broche de direction (1), une enveloppe (3) qui loge la broche de direction (1), une console (4) montée sur le châssis du véhicule et comportant au moins une joue latérale (5, 6) qui s'étend latéralement à l'enveloppe (3) et porte l'enveloppe (3), une installation de blocage (9) susceptible d'être ouverte et fermée, et qui, à l'état fermé, bloque l'enveloppe (3) de manière indéréglable à la console (4), et à l'état ouvert permet à l'enveloppe (3) de se régler par rapport à la console (4) dans une direction de réglage (18) pour le réglage longitudinal de la colonne de direction et dans une direction de réglage (20) pour le réglage en hauteur ou d'inclinaison de la colonne de direction, et une broche de serrage (12) traversant un trou oblong (10, 11) de l'enveloppe (3) et d'au moins une joue (5, 6) ainsi qu'au moins une pièce de support (21, 22) traversée par le goujon de serrage (12),
cette pièce de support étant d'une part coulissante pour la première direction de réglage (18) et bloquée pour la seconde direction de réglage (20) avec l'enveloppe (3) et d'autre part, coulissante dans la seconde direction de réglage (20) et bloquée dans la première direction de réglage (18), en étant reliée aux joues latérales (5, 6), on à l'une d'elles **caractérisée en ce qu'**
- au moins une pièce d'appui (21, 22) est réalisée sous la forme d'une plaque essentiellement plane et
- la liaison coulissante dans la direction de réglage respective (18, 20) et bloquée dans l'autre direction de réglage respective (18, 20) avec l'enveloppe (3) et les joues latérales (5, 6) se fait chaque fois par l'intermédiaire d'au moins un goujon (24, 26) traversant un trou oblong (25, 28),
- le goujon (24, 26) étant relié de manière non coulissante à l'une des deux pièces à relier (21, 22; 3, 5, 6) dans les deux directions de réglage (18, 20), et
- le trou oblong (25, 28) est installé dans l'autre des deux pièces à relier (21, 22; 3, 5, 6), et s'étend dans la direction de réglage respective (18, 20).

2. Colonne de direction réglable selon la revendication 1,
**caractérisée en ce que**
au moins un goujon (26) est relié à la pièce d'appui (21, 22) de manière bloquée dans les deux directions de réglage (18, 20) et le trou oblong (28) traversé par le goujon se trouve dans la joue latérale (5, 6), pour relier au moins une pièce d'appui (21, 22) aux joues latérales (5, 6) ou l'une des joues latérales (5, 6).

3. Colonne de direction réglable selon la revendication 2,
**caractérisée en ce que**
le goujon (26) traverse les trous oblongs (28) des joues latérales (5, 6) des deux côtés de l'enveloppe (3).

4. Colonne de direction réglable selon la revendication 3,
**caractérisée en ce que**
le goujon (26) est relié de manière bloquée dans les deux directions de réglage (18, 20), aux segments d'extrémité des deux côtés avec chaque fois au moins une pièce d'appui (21, 22).

5. Colonne de direction réglable selon les revendications 1 à 4,
**caractérisée en ce qu'**
l'enveloppe (3) comporte un goujon (24) pour relier au moins une pièce d'appui (21, 22) à l'enveloppe (3), et la pièce d'appui (21, 22) comporte le trou oblong (25) traversé par le goujon (24).

6. Colonne de direction réglable selon les revendications 1 à 5,
**caractérisée en ce qu'**
au moins une pièce d'appui (21, 22) est prévue sur le côté extérieur de l'une ou des deux joues latérales (5, 6).

7. Colonne de direction réglable selon les revendications 1 à 6,
**caractérisée par**
- au moins deux pièces d'appui (21, 22), sur au moins un côté de l'enveloppe (3), entre lesquelles se place au moins une lamelle (29, 34) portée par l'enveloppe (3) ou la console (4), et/ou
- au moins deux lamelles (29, 34) prévues sur l'enveloppe (3) ou la console (4), sur au moins l'un des côtés de l'enveloppe (3), et entre lesquelles il y a au moins une pièce d'appui (21, 22),
- les surfaces s'appuyant l'une contre l'autre et appartenant à la pièce d'appui respective (21, 22) et à la lamelle respective (29, 34), ont des surfaces de friction pour bloquer l'enveloppe (3) par rapport à la console (4) dans au moins une direction de réglage (18, 20) lorsque l'installation de blocage est en position fermée.

8. Colonne de direction réglable selon la revendication 7,
**caractérisée par**
au moins une pièce d'appui (21, 22) de chaque côté de l'enveloppe (3).

9. Colonne de direction réglable selon les revendications 1 à 8,
**caractérisée par**
une lamelle (29, 34) sur les deux côtés de l'enveloppe (3), cette lamelle ayant des surfaces de friction coopérant chacune avec la pièce d'appui respective (21, 22).

10. Colonne de direction réglable selon la revendication 9,
**caractérisée par**
- au moins une lamelle (29), sur un côté de l'enveloppe (3) pour réaliser sur l'enveloppe (3), un élément de fixation agissant dans la direction de réglage (18) parallèle à la direction longitudinale, et
- au moins une lamelle (34), sur l'autre côté de l'enveloppe (3) pour réaliser sur la console (4), un élément de fixation agissant dans la direction de réglage (20) du réglage en hauteur et/ou en inclinaison.

11. Colonne de direction réglable selon les revendications 1 à 10,
**caractérisée par**
- un paquet de pièces d'appui (31, 36) comprenant au moins deux pièces d'appui (21, 22) et qui coopère avec le paquet de lamelles (30, 35) comprenant au moins deux lamelles (29, 34),
- les pièces d'appui (21, 22) du paquet de pièces d'appui (31, 36) et les lamelles (29, 34) du paquet de lamelles (30, 35) étant empilées en sandwich.

12. Colonne de direction réglable selon les revendications 1 à 11,
**caractérisée en ce que**
la pièce d'appui (21, 22) est une pièce en tôle emboutie.
